(19) Europäisches Patentamt / European Patent Office / Office européen des brevets

(11) **EP 4 193 137 B1**

(12) **EUROPEAN PATENT SPECIFICATION**

(45) Date of publication and mention
of the grant of the patent:
**18.03.2026 Bulletin 2026/12**

(21) Application number: **20948927.7**

(22) Date of filing: **10.08.2020**

(51) International Patent Classification (IPC):
***G01N 1/31*** *(2006.01)*        ***G01N 1/34*** *(2006.01)*
***G01N 1/40*** *(2006.01)*

(52) Cooperative Patent Classification (CPC):
**G01N 1/31; G01N 1/34; G01N 1/4022;**
G01N 2001/4027

(86) International application number:
**PCT/CN2020/108120**

(87) International publication number:
**WO 2022/032428 (17.02.2022 Gazette 2022/07)**

(54) **XYLENE-FREE TISSUE PROCESSOR AND METHOD FOR PROCESSING TISSUE**

XYLOLFREIE GEWEBEAUFBEREITUNGSVORRICHTUNG UND VERFAHREN ZUR VERARBEITUNG VON GEWEBE

PROCESSEUR DE TISSU SANS XYLÈNE ET PROCÉDÉ DE TRAITEMENT DE TISSU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2023 Bulletin 2023/24**

(73) Proprietor: **Leica Biosystems Nussloch GmbH**
**69226 Nussloch (DE)**

(72) Inventor: **LIU, Bin**
**Shanghai 201206 (CN)**

(74) Representative: **Schaumburg und Partner**
**Patentanwälte mbB**
**Mauerkircherstraße 31**
**81679 München (DE)**

(56) References cited:
EP-A1- 4 182 656          WO-A1-2006/089365
WO-A1-2016/187937          CN-A- 101 929 927
CN-A- 102 645 356          CN-A- 104 964 858
US-A1- 2007 243 626        US-A1- 2008 220 468
US-A1- 2008 248 560        US-A1- 2010 323 395
US-B2- 8 557 511

## Description

## TECHNICAL FIELD

The present invention relates to a field of tissue processing, particular to a tissue processor and a method for tissue processing by a tissue processor.

## BACKGROUND

Biological tissue samples are very important for biological research, medical pathological detection or other related fields. A tissue processing method usually includes steps of fixation of a tissue sample, dehydration of the fixed tissue sample with a dehydrating reagent, clearing of the dehydrated tissue sample with a clearing reagent to remove the dehydrating reagent, and infiltration of the cleared tissue sample with a carrier material. Xylene, a colorless and transparent liquid with strong irritation and being harmful to human body as a carcinogen, is commonly used in the tissue processing method to remove the dehydrating reagent such as ethanol in the tissue sample. It is necessary to remove xylene to ensure a good working environment.

It has been proposed to use a substitute of xylene, such as isopropanol, abbreviated as IPA in the tissue processing method. CN101929927B discloses a xylene-free method for processing tissue sample, which includes addition of a carrier material protective reagent, for example, PARALAST to remove the isopropanol in the tissue sample and reactor after clearing the dehydrated tissue sample with the isopropanol so as to reduce the amount of isopropanol mixed into the carrier material such as paraffin.

However, this xylene-free method requires the use of an additional reagent (such as PARALAST), resulting in an expensive cost and complicated process partly due to the disposal of waste chemical reagent such as PARALAST. In addition, other existing tissue processing methods or devices supporting xylene-free treatment often cause the carrier material entering an air system, thus blocking the air system, with increased maintenance cost and reduced lifetime of device.

Therefore, there is an urgent need for an improved xylene-free processor and a tissue processing method using the same, particularly capable of removing isopropanol in an effective, a low-cost and simple manner.

Document EP 4 182 656 A1 discloses a tissue processor comprising retorts and a pressure generating assembly. The pressure generating assembly is fluidly coupled with the retorts.

Document WO 2016/187937 A1 discloses a tissue dehydration system having processing cylinders.

## SUMMARY

The present invention seeks to solve at least one of the problems that exist in the related art to at least some extent. Accordingly, a tissue processor and a method for tissue processing performed by the tissue processor according to the independent claims are provided. Further embodiments are disclosed in the dependent claims provided.

## BRIEF DESCRIPTION OF THE DRAWINGS

These and/or other aspects and advantages of embodiments of the present invention will become apparent and more readily appreciated from the following descriptions made with reference to the drawings, in which:

Figure 1 is a schematic diagram of a tissue processor 1 according to an embodiment of the present invention;
Figure 2 is another schematic diagram of a tissue processor 1 according to an embodiment of the present invention;
Figure 3 is another schematic diagram of a tissue processor 1 according to an embodiment of the present invention;
Figure 4 is another schematic diagram of a tissue processor 1 according to an embodiment of the present invention;
Figure 5 is another schematic diagram of a tissue processor 1 according to an embodiment of the present invention;
Figure 6 is another schematic diagram of a tissue processor 1 according to an embodiment of the present invention;
Figure 7 is another schematic diagram of a tissue processor 1 according to an embodiment of the present invention;
Figure 8A is a schematic diagram of a tissue processor 2 according to an embodiment of the present invention;
Figure 8B is a schematic diagram of a tissue processor 2 according to an embodiment of the present invention;
Figure 9 is a schematic process flow diagram of the tissue processor according to some embodiments of the present invention;
Figure 10 is a flow chart of a method for tissue processing S1 according to some embodiments of the present invention;
Figure 11 is another flow chart of a method for tissue processing S1 according to an embodiment of the present invention;
Figure 12 is a flow chart of a step S900 of the method for tissue processing S1 according to an embodiment of the

EP 4 193 137 B1

present invention;
Figure 13 is a flow chart of a method for tissue processing S2 according to some embodiments of the present invention; and
Figure 14 is a graph of the temperature procedure in the reactor of the processor in the infiltration according to an embodiment of the present invention.

## DETAILED DESCRIPTION

Embodiments of the present invention are described in detail below, examples of which are illustrated in the drawings. The embodiments described herein with reference to drawings are explanatory and used to generally understand the present invention. The embodiments shall not be construed to limit the present invention. The same or similar elements and the elements having same or similar functions are denoted by like reference numerals throughout the descriptions.

It should be illustrated that, terms used in the present disclosure are only for the purpose of describing specific embodiments but should not be construed to limit the present invention. As used in embodiments of the present invention and the appended claims, "a", "an" and "the" in singular forms mean including plural forms as well, unless clearly indicated in the context otherwise. It should also be understood that, as used herein, the term "and/or" represents and contains any one and all possible combinations of one or more associated listed items.

In the present disclosure, terms such as "first" and "second" are used herein for purposes of description and are not intended to indicate or imply relative importance or significance or impliedly indicate quantity of the technical feature referred to. Thus, the feature defined with "first" and "second" may comprise one or more this feature. In the description of the present invention, "a plurality of" means two or more than two this features, unless specified otherwise.

In the description of the present invention, it should be understood that, unless specified or limited otherwise, the terms "arranged," "connected," and "coupled" and variations thereof are used broadly and encompass such as mechanical or electrical arrangements, connections and couplings, also can be inner arrangements, connections and couplings of two components, and further can be direct and indirect arrangements, connections, and couplings, which can be understood by those skilled in the art according to the detail embodiment of the present invention.

An improved tissue processor and a method for tissue processing performed by the improved tissue processor provided in the embodiments of the present invention are described below with reference to the drawings.

The improved method for tissue processing or the tissue processor is capable of supporting the xylene-free treatment and effectively removing the substitute of xylene (such as isopropanol, IPA), without addition of further protective chemical reagent (such as PARALAST) to remove the isopropanol, thus simplifying the tissue processing method and saving cost significantly.

Further, the tissue processor provided supports purifying the isopropanol during the tissue processing, without additional paraffin purification step, specifically, the isopropanol in the paraffin can be gently and uniformly separated from the paraffin by controlling the paraffin feeding speed, the temperature and pressure in the reactor, avoiding generating IPA foam in a short time and IPA foam entering into an air system. The tissue processor supports paraffin purification not only during a tissue processing period but also at a non-tissue processing stage, thus capable of obtaining highly purified paraffin for subsequent infiltration in an effective, low cost and simple manner, thereby increasing the lifetime of paraffin and contributing to obtaining high qualified tissue sample.

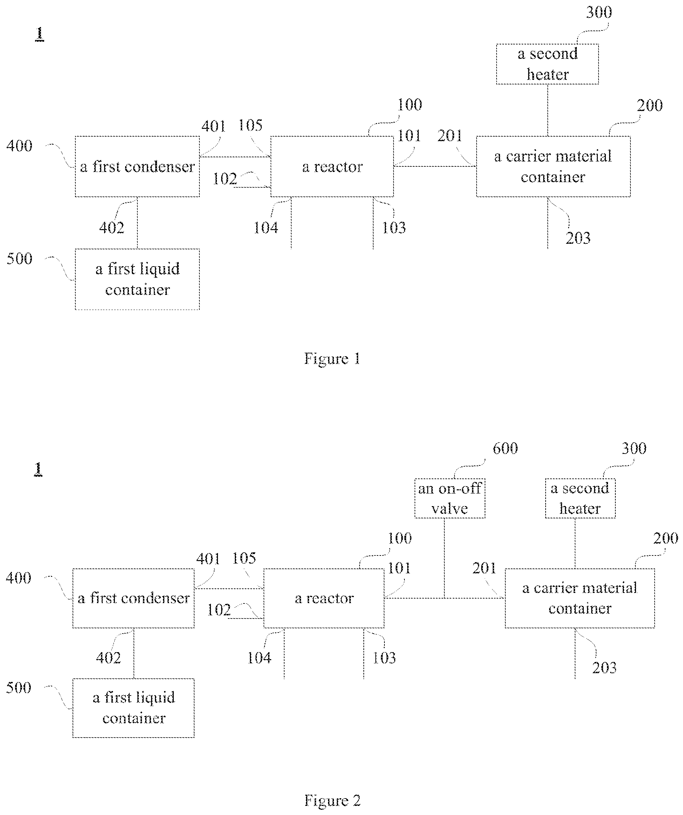

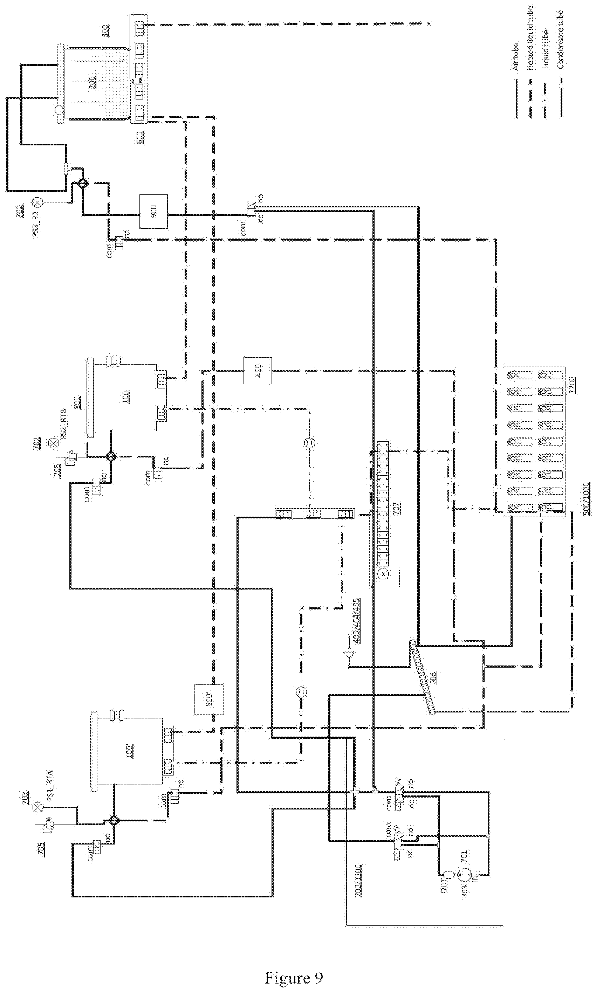

In a first aspect of the present invention, as shown in Figures 1 to 9, provided in embodiments is a tissue processor 1.

In an embodiment, as illustrated in Figure 1, the tissue processor 1 includes a reactor 100, a carrier material container 200, a second heater 300, a first condenser 400, and a first liquid container 500.

## Reactor 100

The reactor 100 is configured to accommodate a tissue sample and allow the tissue sample to be processed, and provided with a first carrier material inlet 101, a first carrier material outlet 102, a processing reagent inlet 103, a processing reagent outlet 104 and a first gas outlet 105.

In an embodiment, the first carrier material inlet 101 and the first carrier material outlet 102 of the reactor 100 are separately arranged.

In this embodiment, the first carrier material inlet 101 of the reactor 100 connects the carrier material outlet of the carrier material container 200 via a tube to receive the carrier material from the carrier material container 200. The first carrier material outlet 102 of the reactor 100 connects the carrier material outlet or a different inlet of the carrier material container 200 via a tube to recycle the carrier material.

In another embodiment, the first carrier material inlet 101 and the first carrier material outlet 102 of the reactor are combined into one same arrangement. In this embodiment, the carrier material is provided into and/or drawn out of the

3

reactor through a same hole via a tube.

In an embodiment, the processor further includes a carrier material receiver which is connected to the first carrier material outlet 102 to receive the carrier material spilt from the reactor.

In an embodiment, the processing reagent inlet 103 and the processing reagent outlet 104 of the reactor 100 are separately arranged. In another embodiment, the processing reagent inlet 103 and the processing reagent outlet 104 of the reactor 100 are combined into one same arrangement. In this embodiment, the processing reagent is provided into and/or drawn out of the reactor through a same hole via a tube.

In practice, the reactor 100 is a retort. The number of reactor 100 in the processor 1 is not limited as long as being suitable for tissue sample processing. For example, the processor 1 can include one, two, three, four, five or six retorts. Tissue samples are provided in cassettes in the retort during the processing. The retort can accommodate 10, 50, 100, 150, 200 or 250 cassettes as required. The cassette may be hollow plastic box which is capable of allowing the chemical reagents flowing into or drawn out effectively. The retort and the cassette are capable of resisting the chemical action of chemical reagents. The retort 100 is tightly sealed in a working environment. The temperature and pressure of the retort 100 can be controlled during the processing as required.

## Carrier material container 200

The carrier material container 200 is configured to accommodate a carrier material, and provided with a second carrier material outlet 201 connected to the first carrier material inlet 101 of the reactor 100 and a second gas outlet 202. In this embodiment, the second carrier material outlet 201 can also be used as a carrier material return inlet. That is, the carrier material is provided from the carrier material container 200 to the reactor 100 or returned from the reactor 100 to the carrier material container 200 through the second carrier material outlet 201 via a tube.

In another embodiment, the carrier material container 200 is further provided with a second carrier material inlet 203 which is connected to the first carrier material outlet 102 of the reactor 100. In this embodiment, the second carrier material inlet 203 and the second carrier material outlet 201 of the carrier material container 200 are separately arranged. Further, the carrier material from the reactor 100 can be separately collected, without returning to the carrier material container 200.

The carrier material container 200 is tightly sealed in a working environment. The temperature and pressure of the carrier material container 200 can be controlled as required. The carrier material can be paraffin or oils suitable for infiltrating tissue samples.

## Second heater 300

The second heater 300 is configured to heat the carrier material in the carrier material container 200. The second heater 300 is deposited inside the carrier material container 200 or deposited outside the carrier material container 200.

In an embodiment, the second heater 300 is a heating element coupled to side walls of the carrier material container 200. In another embodiment, the second heater 300 is an oven and the carrier material container 200 is arranged in the chamber of the oven. The second heater 300 is configured to control the carrier material container 200 at the temperature that the carrier material is in a melt state, thereby allowing the carrier material to be provided into the retort 100 or other devices via a tube. For example, the temperature in the carrier material container 200 is controlled in a range of 65°C to 85°C, including any value falling into the range, thus the clearing reagent such as isopropanol can be fully separated from the carrier material in the carrier material container 200.

Preferably, the tube is provided with a heater component around it, such that the carrier material is kept in a melt state during provided into or drawn from the retort 100. The tube and the heater component around it can be separately arranged or combined into one same arrangement such as a heating tube.

## First condenser 400 and first liquid container 500

The first condenser 400 is provided with a first air inlet 401 connected to the first gas outlet 105 of the reactor 100, and a first liquid outlet 402, and configured to condense at least a portion of gas from the reactor 100 into a liquid. The first liquid container 500 is connected to the first liquid outlet 402 of the first condenser 400 and configured to receive the condensed liquid from the first condenser 400.

In an embodiment, the first condenser 400 further comprises a cooling coil 403, optionally further comprise a cooling fan 404 and a cooling channel 405 surrounding the cooling coil 403, thereby enhancing the cooling performance. Specifically, the first condenser 400 is configured to mainly condense the isopropanol vapor from the carrier material such as paraffin during the paraffin infiltration. For example, 60%, 65%, 70%, 75%, 80%, 85%, 90%, 91%, 92%, 93%, 94%, 95%, 96%, 97%, 98% or 99% of the isopropanol vapor can be condensed into a liquid by the first condenser 400. The volume of the first liquid container may be 1L, 5L, 10L, 15L, 20L, 25L or 30L, which is not limited as long as capable of sufficiently receiving the condensed liquid from the first condenser 400. It is surprisingly found that addition of a condenser system in the processor is capable of removing the isopropanol in the carrier material effectively and efficiently under a suitable temperature and pressure, thereby avoiding additional isopropanol removing reagent and subsequent waste chemical reagent treatment, thus saving production cost and being environmentally friendly.

**On-off valve 600**

As illustrated in Figures 2, in another embodiment, the tissue processor 1 further includes an on-off valve 600.

The on-off valve 600 is arranged at a pipe connecting the first carrier material inlet 101 of the reactor and the second carrier material outlet 201 of the carrier material container 200.

In this embodiment, the on-off valve 600 is configured to be operated in cycles each comprising an open time of 1 to 10 seconds preferably 1.5 seconds and a close time of 0.2 to 5 seconds preferably 1.0 second. The open time of the on-off valve 600 can be set to 1.0, 1.5, 2.0, 2.5, 3.0, 3.5, 4.0, 4.5, 5.0, 5.5, 6.0, 6.5, 7.0, 7.5, 8.0, 8.5, 9.0, 9.5 or 10 seconds. The close time of the on-off valve can be set to 0.2, 0.5, 0.8, 1.0, 1.2, 1.5, 1.8, 2.0, 2.2, 2.5, 2.8, 3.0, 3.2, 3.5, 3.8, 4.0, 4.2, 4.5, 4.8 or 5 seconds. The on-off valve 600 is configured to be operated in specific cycles such that the providing speed of carrier material such as melting paraffin from the carrier material container 200 to the reactor 100 can be slowed down and the isopropanol in the melting paraffin can be appropriately separated from the paraffin under working conditions (i.e. a high temperature and a negative pressure), thereby preventing isopropanol in the paraffin from generating large amounts of foams in a short time when the melting paraffin fills into the reactor 100 under the working conditions, and further avoiding IPA foams entering into an air system and blocking the air system by paraffin.

**First pressure control device 700**

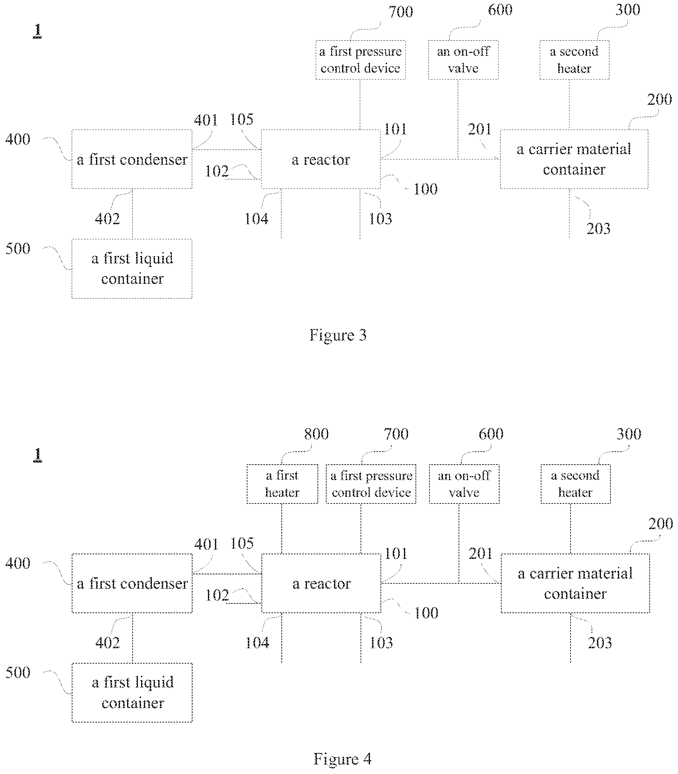

As illustrated in Figures 3, in an embodiment, the tissue processor 1 further includes a first pressure control device 700.

The first pressure control device 700 includes a pump 701, a pressure sensor 702, a hydraulic damper 703, air valves 704, relief valves 705, air manifold 706 and tubes for pressure delivery. The first pressure control device 700 is fluidly connected to the retort 100 via a tube to provide positive or negative pressure to the retort 100. In an embodiment, the pressure of the reactor is controlled by the first pressure control device 700 to a range of 20 kPa to -80 kPa during the tissue processing. In this embodiment, during the infiltration with the carrier material, the pressure of the reactor is controlled to -15 kPa to -75 kPa by the first pressure control device 700.

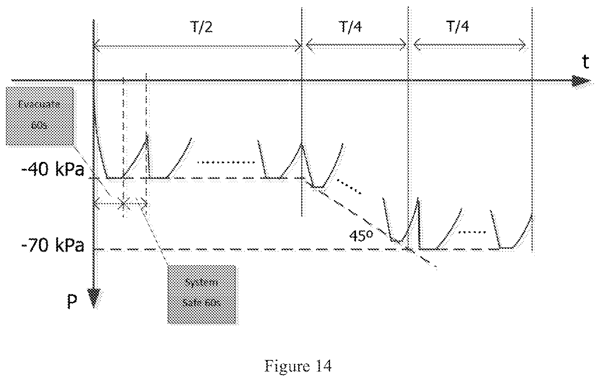

Specifically, as shown in Figure 14, the first pressure control device 700 is configured to control the reactor to be operated under pressures as follows during the infiltration: a first stage: keeping at a pressure of -15 kPa to -50 kPa preferably -40 kPa for 20 to 40 minutes preferably 30 minutes; a second stage: decreasing the pressure at a rate of 0.5 to 4 kPa/min for 5 to 25 minutes preferably 15 minutes; and a third stage: keeping at a pressure of -60 kPa to -75 kPa preferably -70 kPa for 10 to 25 minutes preferably 15 minutes. More specific, in the first stage, the reactor is controlled to a relative higher pressure such as a -40 kPa for about 30 minutes, thereby allowing large amounts of isopropanol generated from the carrier material gently and uniformly and avoiding generating IPA foams; in the second stage, the pressure of the reactor is further decreased at a ramp rate for about 15 minutes to the desired pressure for infiltration, thereby allowing remaining isopropanol fully generated from the carrier material; and in the third stage, the reactor is controlled to about -70 kPa for performing the infiltration of tissue sample. As such, the obtained tissue sample is of high quality.

According to this embodiment, the pressure in the reactor is decreased gradually, such that the isopropanol vapor is allowed to be gently and uniformly generated from the carrier material in the reactor, preventing isopropanol in the paraffin from generating large amounts of foams in a short time when the melting paraffin fills into the reactor under the working conditions, and further avoiding IPA foams entering into an air system and blocking the air system by paraffin.

In another embodiment, the first pressure control device 700 is further connected to the carrier material container 200 to provide positive or negative pressure to the carrier material container 200.

**First heater 800**

As illustrated in Figures 4, in an embodiment, the tissue processor 1 further includes a first heater 800.

The first heater 800 is configured to heat a processing reagent and/or the carrier material in the reactor. In the embodiment, the first heater 800 is a heating lid. Specifically, the first heater 800 is configured to control the reactor 100 to be operated at temperatures as follows during the infiltration: increasing at a rate of 0.5 to 2°C/min preferably 1.5°C/min from 50 to 70°C preferably 65°C, to 75 to 90°C preferably 85°C, then keeping at 75 to 90°C preferably 85°C for 30 to 40 minutes. More specific, the best temperature for infiltration is chosen at 85°C because the boiling point of the isopropanol is 82°C, thus almost all the isopropanol can be removed during the infiltration. The temperature of the reactor 100 is increased from 65°C to 85°C gradually, thus avoiding the generation of IPA foams in a short time due to the rapid increase of temperature.

According to this embodiment, the temperature of the reactor is increased gradually, such that the isopropanol vapor is allowed to be gently and uniformly generated from the carrier material in the reactor, preventing isopropanol in the paraffin from generating large amounts of foams in a short time when the melting paraffin fills into the reactor under the working conditions, and further avoiding IPA foams entering into an air system and blocking the air system by paraffin.

## Second condenser 900 and second liquid container 1000

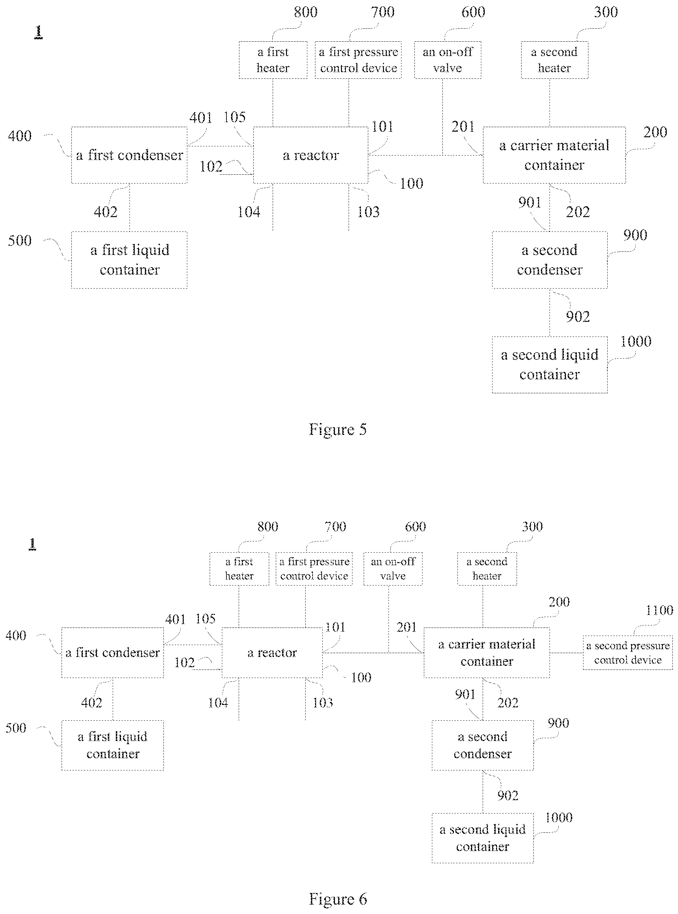

As illustrated in Figures 5, in an embodiment, the tissue processor 1 further includes a second condenser 900 and a second liquid container 1000.

The second condenser 900 is provided with a second air inlet 901 connected to the second gas outlet 202 of the carrier material container 200, and a second liquid outlet 902, and configured to condense at least a part of gas from the carrier material container 200 into a liquid. In an embodiment, the second condenser 900 further includes a cooling coil 403, optionally further includes a cooling fan 404 and a cooling channel 405 surrounding the cooling coil 403. The second liquid container 1000 is connected to the second liquid outlet 902 of the second condenser 900 and configured to receive the condensed liquid from the second condenser 900. The configuration of the second condenser 900 and the second liquid container 1000 are respectively similar to the first condenser 400 and the first liquid container 500, which will not be described in detail.

Specifically, the second condenser 900 is configured to mainly condense the isopropanol vapor from the carrier material such as paraffin before providing the carrier material to the reactor 100 from the carrier material container 200. For example, 1%, 2%, 5%, 10%, 15%, 20%, 25%, 30%, 35%, 40%, 45%, 50%, 55%, 60%, 65%, 70%, 75%, 80%, 85%, 90%, 91%, 95% or 99% of the isopropanol vapor can be condensed into a liquid by the second condenser 900. It is surprisingly found that addition of a condenser system in the processor is capable of removing the isopropanol in the carrier material effectively and efficiently under a suitable temperature and pressure, thereby avoiding additional isopropanol removing reagent and subsequent waste chemical reagent treatment, thus saving production cost and being environmentally friendly.

In an embodiment, the first condenser 400 and the second condenser 900 are separately arranged and the first liquid container 500 and the second liquid container 1000 are separately arranged, thus the processor 1 includes two sets of condensers to remove isopropanol. That is, the isopropanol in the reactor 100 is condensed by the first condenser 400, and the isopropanol in the carrier material container 200 is condensed by the second condenser 900. In another embodiment, the first condenser 400 and the second condenser 900 are one same arrangement, and the first liquid container 500 and the second liquid container 1000 are one same arrangement, thus the processor 1 includes one set of condenser to remove isopropanol. That is, the isopropanol in the reactor 100 and the isopropanol in the carrier material container 200 can be condensed by a same condenser.

In an embodiment, the tissue processing is performed (i.e. working state), in which the isopropanol in the carrier material such as paraffin in the carrier material container 200 is removed by the second condenser 900 before providing the carrier material to the reactor 100 from the carrier material container 200, and the remaining isopropanol in the carrier material in the reactor 100 is further removed by the first condenser 400 during the infiltration. In another embodiment, the tissue processing is not performed (i.e. a resting state), however, the isopropanol in the carrier material such as paraffin in the carrier material container 200 is removed by the second condenser 900.

According to this embodiment, the tissue processor supports paraffin purification not only during tissue processing period but also at non-tissue processing stage, thus capable of obtaining highly purified paraffin for subsequent infiltration in an effective, low cost and simple manner, thereby increasing the lifetime of paraffin and contributing to obtaining high qualified tissue sample.

## Second pressure control device 1100

As illustrated in Figures 6, in an embodiment, the tissue processor 1 further includes a second pressure control device 1100.

In an embodiment, the configuration of the second pressure control device 1100 is similar to the first pressure control device 700, which will not be described again.

Specifically, the second pressure control device 1100 is configured to control the carrier material container 200 to be operated under pressures in cycles each comprising: a pressure from -10 to -75 kPa preferably -40 kPa for 25 seconds to 45 seconds preferably 34 seconds, and an optional ambient pressure for 5 seconds to 15 seconds preferably 6 seconds. Thus, the isopropanol can be separated from the carrier material fully, thereby obtaining highly purified carrier material.

In an embodiment, the first pressure control device 700 and the second pressure control device 1100 are separately arranged, thus the processor 1 includes two sets of pressure control devices. That is, the isopropanol in the reactor 100 can be drawn out by the first pressure control device 700, and the isopropanol in the carrier material container 200 can be drawn out by the second pressure control device 1100. In another embodiment, the first pressure control device 700 and the second pressure control device 1100 are one same arrangement. That is, the isopropanol in the reactor 100 and the isopropanol in the carrier material container 200 can be drawn out by a same pressure control device.

**Processing reagent container 1200**

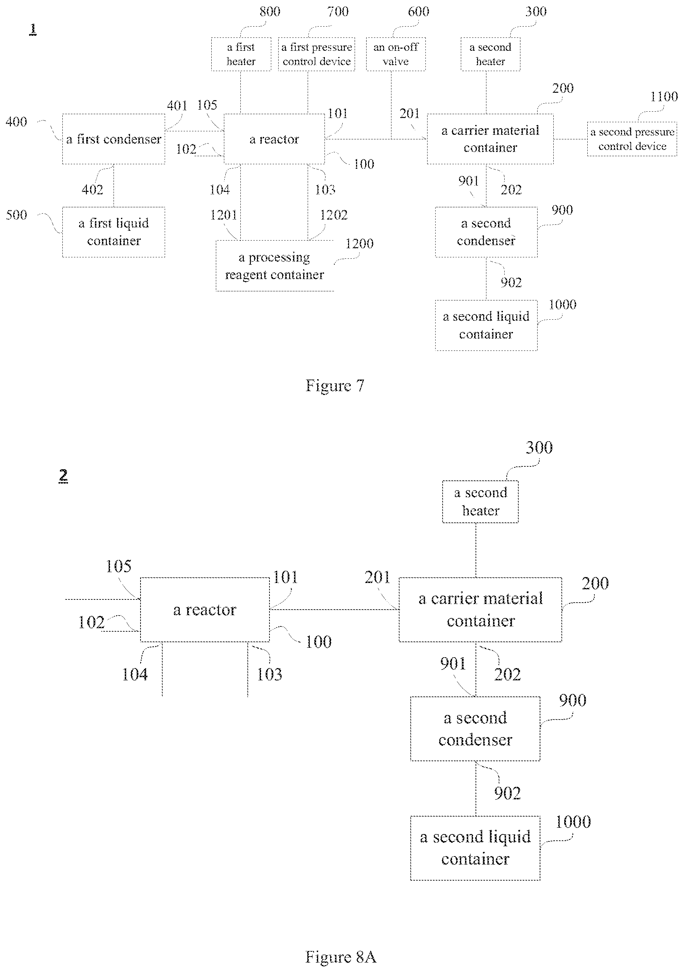

As illustrated in Figures 7, in an embodiment, the tissue processor 1 further includes a processing reagent container 1200.

The processing reagent container 1200 is provided with a discharge outlet 1202 and a return inlet 1201, in which the discharge outlet 1202 is connected to the processing reagent inlet 103 of the reactor 100, and the return inlet 1201 is connected to the processing reagent outlet 104 of the reactor 100.

In an embodiment, the discharge outlet 1202 and the return inlet 1201 are separately arranged. In another embodiment, the discharge outlet 1202 and the return inlet 1201 are combined into one same arrangement. That is, the processing reagent is provided to the reactor 100 from the processing reagent container 1200 or drawn to the processing reagent container 1200 from the reactor 100 through a same hole via a tube. In this embodiment, the processing reagent container 1200 comprises a fixing reagent container, a dehydrating reagent container, a clearing reagent container and optionally a carrier material protective reagent container. Further, the first liquid container 500 and the second liquid container 1000 can be accommodated in the chamber of the processing reagent container 1200. In this embodiment, the processing reagent container 1200 can accommodate 1 to 100 sub-containers and any value fallen into the range. The sub-containers can be a fixing reagent container, a dehydrating reagent container, a clearing reagent container, a carrier material protective reagent container or a condensate container, for example, bottles in any volume suitable for accommodating chemical reagents, such as a formaldehyde solution, ethanol in a series of concentrations, isopropanol, paraffin and the like.

A plurality of reagents in respective reagent containers are provided into the reactor 100 and/or returned to the corresponding reagent containers in sequence by a rotary valve 707. The rotary valve 707 can control which reagent is to be provided into the reactor 100 through a corresponding tube and can allow the reagent returned to the corresponding reagent containers. The processing reagents are provided into the reactor 100 by the action of the pressure control device 700 as described above. In an exemplary embodiment, the processing reagent container 1200 accommodates 18 reagent bottles. The rotary valve 707 has 18 positions to control the filling and/or draining of the reagents in 18 reagent bottles.

According to the first aspect, the tissue processor supports paraffin purification not only during a tissue processing period but also at a non-tissue processing stage, thus capable of obtaining highly purified paraffin for subsequent infiltration in an effective, low cost and simple manner, thereby increasing the lifetime of paraffin and contributing to obtaining high qualified tissue sample.

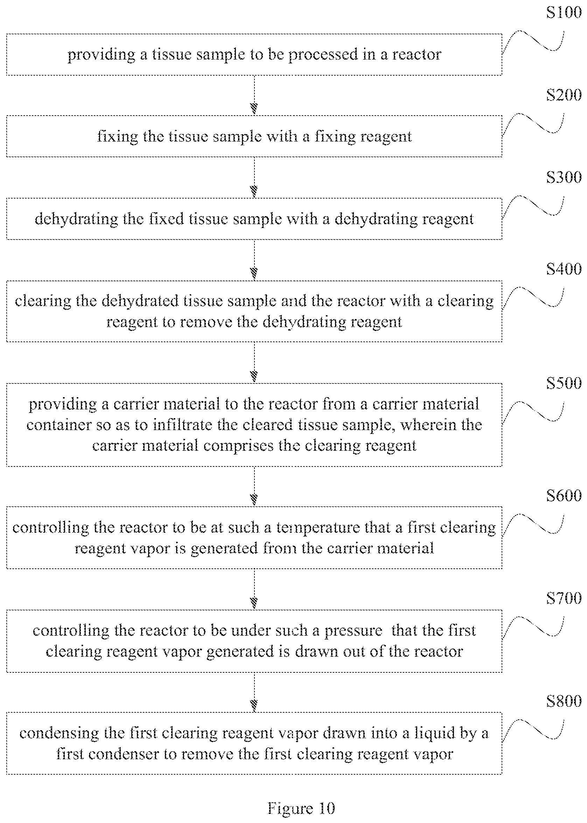

In a second aspect of the present invention, as shown in Figures 10 to 14, provided in embodiments is a method for tissue processing S1 performed by the tissue processor 1 as described in the first aspect.

As illustrated in Figure 10, the method for tissue processing S1 performed by the tissue processor 1 as described in the first aspect includes steps of:

S100: providing a tissue sample to be processed in a reactor,
S200: fixing the tissue sample with a fixing reagent,
S300: dehydrating the fixed tissue sample with a dehydrating reagent,
S400: clearing the dehydrated tissue sample and the reactor with a clearing reagent to remove the dehydrating reagent,
S500: providing a carrier material to the reactor from a carrier material container so as to infiltrate the cleared tissue sample, wherein the carrier material comprises the clearing reagent,
S600: controlling the reactor to be at such a temperature that a first clearing reagent vapor is generated from the carrier material,
S700: controlling the reactor to be under such a pressure that the first clearing reagent vapor generated is drawn out of the reactor, and
S800: condensing the first clearing reagent vapor drawn into a liquid by a first condenser to remove the first clearing reagent vapor.

For the S100 to S400, they are similar to those commonly applied in the current tissue processing method. The difference between the present processing method and the current processing method is mainly in S500 to S800, which are described in detail as follows.

In an embodiment, S500 providing a carrier material to the reactor from a carrier material container so as to infiltrate the cleared tissue sample further includes: controlling, by an on-off valve, the carrier material to be provided from the carrier material container to the reactor in cycles each comprising an open time of 1 to 10 seconds preferably 1.5 seconds and a close time of 0.2 to 5 seconds preferably 1.0 second. Therefore, the providing speed of carrier material such as melting paraffin from the carrier material container to the reactor can be slowed down and the isopropanol in the melting paraffin can be appropriately separated from the paraffin under working conditions (i.e. a high temperature and a negative pressure), thereby preventing isopropanol in the paraffin from generating large amounts of foams in a short time when the melting paraffin fills into the reactor under the working conditions, and further avoiding IPA foams entering into an air system and blocking the air system by paraffin.

In an embodiment, S600 controlling the reactor to be at such a temperature that a first clearing reagent vapor is generated from the carrier material further includes controlling the reactor to be operated at temperatures as follows: increasing at a rate of 0.5 to 2°C/min preferably 1.5°C/min from 50 to 70°C preferably 65°C, to 75 to 90°C preferably 85°C, then keeping at 75 to 90°C preferably 85°C for 30 to 40 minutes. According to the embodiment, the temperature of the reactor is increased gradually, such that the isopropanol vapor is allowed to be gently and uniformly generated from the carrier material in the reactor, preventing isopropanol in the paraffin from generating large amounts of foams in a short time when the melting paraffin fills into the reactor under the working conditions, and further avoiding IPA foams entering into an air system and blocking the air system by paraffin.

In an embodiment, S700 controlling the reactor to be under such a pressure that the first clearing reagent vapor generated is drawn out of the reactor further includes controlling the reactor to be operated under pressures as follows: a first stage: keeping at a pressure of -15 kPa to -50 kPa preferably -40 kPa for 20 to 40 minutes preferably 30 minutes; a second stage: decreasing the pressure at a rate of 0.5-4 kPa/min for 5 to 25 minutes preferably 15 minutes; and a third stage: keeping at a pressure of -60 kPa to -75 kPa preferably -70 kPa for 10 to 25 minutes preferably 15 minutes. According to this embodiment, the pressure in the reactor is decreased gradually, such that the isopropanol vapor is allowed to be gently and uniformly generated from the carrier material in the reactor, preventing isopropanol in the paraffin from generating large amounts of foams in a short time when the melting paraffin fills into the reactor under the working conditions, and further avoiding IPA foams entering into an air system and blocking the air system by paraffin.

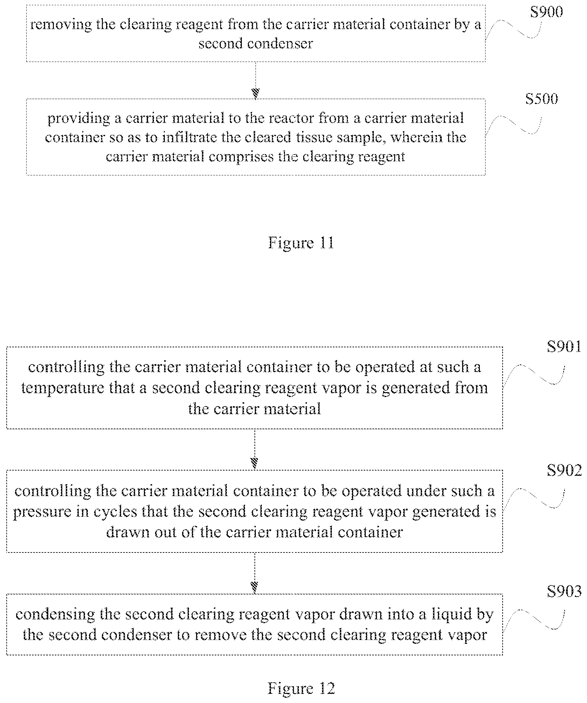

In an embodiment, as illustrated in Figure 11, the method for tissue processing S1 further includes S900 removing the clearing reagent from the carrier material container by a second condenser prior to S500.

As illustrated in Figure 12, in this embodiment, S900 further includes:

S901: controlling the carrier material container to be operated at such a temperature that a second clearing reagent vapor is generated from the carrier material;
S902: controlling the carrier material container to be operated under such a pressure in cycles that the second clearing reagent vapor generated is drawn out of the carrier material container, in which each cycle includes: a pressure from -20 to -75 kPa preferably -40 kPa for 25 seconds to 45 seconds preferably 34 seconds, and an optional ambient pressure for 5 seconds to 15 seconds preferably 6 seconds; and
S903: condensing the second clearing reagent vapor drawn into a liquid by the second condenser to remove the second clearing reagent vapor.

According to the embodiment, the clearing reagent such as isopropanol in the carrier material such as paraffin is partly removed in the carrier material container, for example, 1%, 2%, 5%, 10%, 15%, 20%, 25%, 30%, 35%, 40%, 45%, 50%, 55%, 60%, 65%, 70%, 75%, 80%, 85%, 90%, 95%, 98% or 99% of the isopropanol is removed in the carrier material container. The remaining clearing reagent such as isopropanol in the carrier material is further removed in the reactor, for example, 99%, 98%, 95%, 90%, 85%, 80%, 75%, 70%, 65%, 60%, 55%, 50%, 45%, 40%, 35%, 30%, 25%, 20%, 15%, 10%, 5%, 2% or 1% of the isopropanol is removed in the reactor. Thus, the clearing reagent such as isopropanol in the carrier material is fully removed, without addition of further protective chemical reagent, thereby simplifying the tissue processing method and saving cost significantly.

According to the second aspect, the method for tissue processing is capable of removing the clearing reagent (such as isopropanol) in the carrier material effectively and efficiently, thereby avoiding additional isopropanol removing reagent and subsequent waste chemical reagent treatment, thus saving production cost and being environmentally friendly.

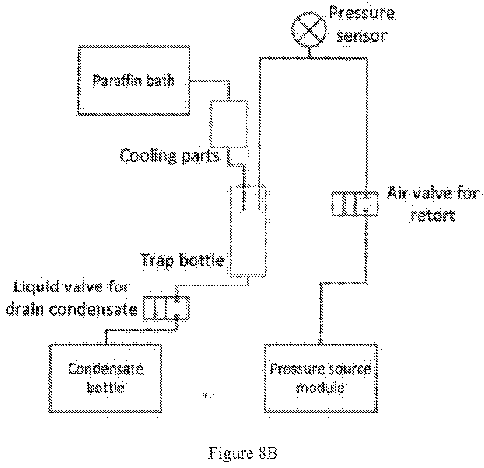

In a third aspect of the present invention, as illustrated in Figure 8A and 8B, provided in embodiments is a tissue processor 2. The tissue processor 2 includes the reactor 100, the carrier material container 200, the second heater 300, the second condenser 900, and the second liquid container 1000.

In another embodiment, the tissue processor 2 further includes the on-off valve 600 as described in the first aspect. In another embodiment, the tissue processor 2 further includes the second pressure control device 1100 as described in the first aspect. In another embodiment, the tissue processor 2 further includes the first condenser 400 and the first liquid container 500 as described in the first aspect. In another embodiment, the tissue processor 2 further includes the first pressure control device 700 as described in the first aspect. In another embodiment, the tissue processor 2 further includes the first heater 800 as described in the first aspect. In another embodiment, the tissue processor 2 further includes the processing reagent container 1200 as described in the first aspect. The configuration and function of the reactor 100, the carrier material container 200, the second heater 300, the first condenser 400, the first liquid container 500, the on-off valve 600, the first pressure control device 700, the first heater 800, the second condenser 900, the second liquid container 1000, the second pressure control device 1100 and the processing reagent container 1200 are respectively similar to those described in the first aspect, which will not be described again due to limited space.

According to the third aspect, the tissue processor supports paraffin purification not only during a tissue processing period but also at a non-tissue processing stage, thus capable of obtaining highly purified paraffin for subsequent infiltration in an effective, low cost and simple manner, thereby increasing the lifetime of paraffin and contributing to obtaining high qualified tissue sample.

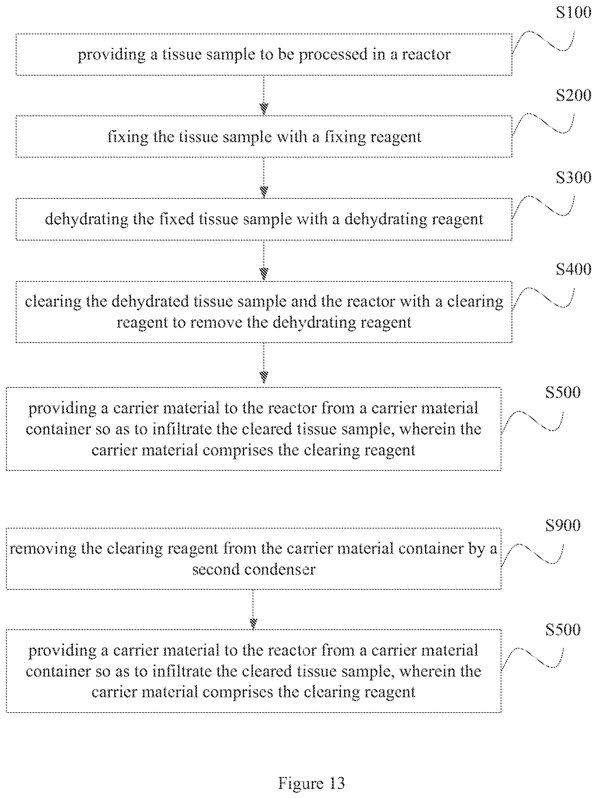

In a fourth aspect of the present invention, as shown in Figure 13, provided in embodiments is a method for tissue processing S2 performed by the tissue processor 2 as described in the third aspect, includes steps of:

S100: providing a tissue sample to be processed in a reactor,
S200: fixing the tissue sample with a fixing reagent,
S300: dehydrating the fixed tissue sample with a dehydrating reagent,
S400: clearing the dehydrated tissue sample and the reactor with a clearing reagent to remove the dehydrating reagent,
S500: providing a carrier material to the reactor from a carrier material container so as to infiltrate the cleared tissue sample,

wherein the method further includes S900 removing the clearing reagent from the carrier material container by a second condenser prior to S500.

In this embodiment, S900 removing the clearing reagent from the carrier material container by a second condenser further includes:

S901: controlling the carrier material container to be operated at such a temperature that a second clearing reagent vapor is generated from the carrier material,
S902: controlling the carrier material container to be operated under such a pressure in cycles that the second clearing reagent vapor generated is drawn out of the carrier material container, each cycle comprising:

a pressure from -20 to -75 kPa preferably -40 kPa for 25 seconds to 45 seconds preferably 34 seconds, and an optional ambient pressure for 5 seconds to 15 seconds preferably 6 seconds, and

S903: condensing the second clearing reagent vapor drawn into a liquid by the second condenser to remove the second clearing reagent vapor.

In another embodiment, the method further includes the following steps after S500:

S600: controlling the reactor to be at such a temperature that a first clearing reagent vapor is generated from the carrier material,
S700: controlling the reactor to be under such a pressure that the first clearing reagent vapor generated is drawn out of the reactor, and
S800: condensing the first clearing reagent vapor drawn into a liquid by a first condenser to remove the first clearing reagent vapor.

The main difference between the method for tissue processing S1 and the method for tissue processing S2 is that: the clearing reagent in the carrier material is substantively removed in the reactor by the first condenser, and optionally the clearing reagent in the carrier material is removed in the carrier material container by the second condenser before S500 providing a carrier material to the reactor from a carrier material container so as to infiltrate the cleared tissue sample in the S1; while the clearing reagent in the carrier material is substantively removed in the carrier material container by the second condenser before S500 providing a carrier material to the reactor from a carrier material container so as to infiltrate the cleared tissue sample, and optionally the remaining clearing reagent in the carrier material is further removed in the reactor by the first condenser in the S2. Thus, the carrier material substantively comprises the clearing reagent before providing from the carrier material container to the reactor in S1, while the carrier material nearly does not comprise the clearing reagent before providing from the carrier material container to the reactor in S2.

In embodiments of the fourth aspect, the details of the S100, S200, S300, S400, S500, S600, S700, S800 and S900 are respectively similar to those in the third aspect, which will not be described again due to limited space. In S2, 60%, 65%, 70%, 75%, 80%, 85%, 90%, 91%, 92%, 93%, 94%, 95%, 96%, 97%, 98%, 99% of the clearing reagent in the carrier material has been removed by the second condenser before providing the carrier material from the carrier material container to the reactor.

According to the fourth aspect, the method for tissue processing is capable of removing the clearing reagent (such as isopropanol) in the carrier material effectively and efficiently, thereby avoiding additional isopropanol removing reagent and subsequent waste chemical reagent treatment, thus saving production cost and being environmentally friendly.

**Examples**

The present invention will be described in more detail using examples. It should be understood that the present invention is not limited by the following examples.

Example 1

The tissue samples were processed by using the tissue processor 1. In this example, only a set of condenser system (i.e., the first condenser 400 and the first liquid container 500) is provided. In this example, the clearing reagent is isopropanol and the carrier material is paraffin. The paraffin used for the tissue processing contains a large amount of isopropanol. The reactor is a retort and the carrier material container is an oven. The isopropanol in the paraffin was not removed in the oven before filling the paraffin into the retort, thus the isopropanol was substantively removed in the retort during the tissue processing.

The operation cycles of the on-off valve was investigated in this example to evaluate the IPA removal effect. The on-off valve was operated in a series of cycles as below. The temperature procedure of the retort was set to increase from 65°C to 85°C within 25 minutes and then keep at 85°C for 35 minutes during the infiltration. The pressure procedure of the retort was set to keep at -40 kPa for 30 minutes, decrease from -40 kPa to -70 kPa within 15 minutes and then keep at -70 kPa for 15 minutes during the infiltration. The IPA removal efficiency, IPA foam generation and tissue sample quality are measured and the results are shown in Table 1.

Table 1 IPA removal effect under different operation cycles of on-off valve

| Indicators | Ex. 1 | | Ex. 2 | | Ex. 3 | | Ex. 4 | | Ex. 5 | | CE.1 | |
|---|---|---|---|---|---|---|---|---|---|---|---|---|
| | Open | Close | Open | Close | Open | Close | Open | Close | Open | Close | Open | Close |
| | 0.5s | 0.5s | 1.5s | 1.0s | 2.0s | 0.5s | 3.0s | 1.0s | 5.0s | 2.0s | remain | -- |
| IPA removal efficiency | 99% | | 99% | | 99% | | 99% | | 99% | | 99% | |
| IPA foam generation | Slow Little amount | | No foam | | Slow Little amount | | Slow Little amount | | Slow some amount | | Rapid Large amount | |
| tissue sample quality | high | | highest | | high | | high | | high | | high | |

Example 2

The tissue processing method is similar to Example 1, except for different temperature procedures set in the retort as below. Specifically, the on-off valve was operated in cycles each comprising 1.5s of open time and 1.0s of close time. The pressure procedure of the retort was set to keep at -40 kPa for 30 minutes, decrease from -40 kPa to -70 kPa within 15 minutes and then keep at -70 kPa for 15 minutes during the infiltration. The IPA removal efficiency, IPA foam generation and tissue sample quality are measured and the results are shown in Table 2.

Table 2 IPA removal effect under different temperature procedures performed in retort

| Indicators | Ex. 6 | Ex. 7 | Ex. 8 | Ex. 9 | Ex. 10 | CE.2 | CE.3 |
|---|---|---|---|---|---|---|---|
| | increase from 65°C to 75°C within 25 minutes; keep at 75°C for 35 minutes | increase from 65°C to 80°C within 25 minutes; keep at 80°C for 35 minutes | increase from 65°C to 85°C within 5 minutes; keep at 85°C for 55 minutes | increase from 65°C to 85°C within 25 minutes; keep at 85°C for 35 minutes | increase from 65°C to 85°C within 45 minutes; keep at 85°C for 15 minutes | keep at 85°C for 1 hour | keep at 65°C for 1 hour |
| IPA removal efficiency | 47% | 72% | 99% | 99% | 99% | 99% | 28% |
| IPA foam generation | No foam | No foam | moderate Large amount | No foam | No foam | Rapid Large amount | No foam |
| tissue sample quality | moderate | high | high | highest | moderate | high | poor |

Example 3

The tissue processing method is similar to Example 1, except for different pressure procedures set in the retort as below. Specifically, the on-off valve was operated in cycles each comprising 1.5s of open time and 1.0s of close time. The temperature procedure of the retort was set to increase from 65°C to 85°C within 25 minutes and then keep at 85°C for 35 minutes during the infiltration. The IPA removal efficiency, IPA foam generation and tissue sample quality are measured and the results are shown in Table 2.

Table 3 IPA removal effect under different pressure procedures performed in retort

| Indicators | Ex. 11 | Ex. 12 | Ex. 13 | Ex. 14 | Ex. 15 | CE.4 | CE.5 |
|---|---|---|---|---|---|---|---|
| | decrease from -40 kPa to -70 kPa within 10 minutes, keep at -70 kPa for 50 minutes | keep at -40 kPa for 5 minutes, decrease from -40 kPa to -70 kPa within 5 minutes, keep at -70 kPa for 50 minutes | keep at -40 kPa for 15 minutes, decrease from -40 kPa to -70 kPa within 15 minutes, keep at -70 kPa for 30 minutes | keep at -40 kPa for 30 minutes, decrease from -40 kPa to -70 kPa within 15 minutes, keep at -70 kPa for 15 minutes | keep at -40 kPa for 45 minutes, decrease from -40 kPa to -70 kPa within 10 minutes, keep at -70 kPa for 5 minutes | keep at -40 kPa for 1 hour | keep at -70 kPa for 1 hour |
| IPA removal efficiency | 99% | 99% | 99% | 99% | 99% | 99% | 99% |
| IPA foam generation | Slow some amount | Slow Little amount | No foam | No foam | No foam | No foam | Rapid Large amount |
| tissue sample quality | high | high | high | highest | moderate | poor | high |

Example 4

The tissue processing method is similar to Example 1, except for two sets of condenser systems provided. The isopropanol in the paraffin was partly removed in the oven before filling the paraffin into the retort, thus the isopropanol was partly removed in the oven and partly removed in the retort. Specifically, the on-off valve was operated in cycles each comprising 1.5s of open time and 1.0s of close time. The temperature procedure of the retort was set to increase from 65°C to 85°C within 25 minutes and then keep at 85°C for 35 minutes during the infiltration. The pressure procedure of the retort was set to keep at -40 kPa for 30 minutes, decrease from -40 kPa to -70 kPa within 15 minutes and then keep at -70 kPa for 15 minutes during the infiltration. The IPA removal efficiency, IPA foam generation and tissue sample quality are measured and the results are shown in Table 2.

It is shown that no IPA foam was generated during the infiltration, 99% of IPA was removed from the paraffin and the tissue sample obtained is of a high quality.

Example 5

The tissue processing method is similar to Example 1, except that the tissue samples were processed by using the tissue processor 2, with only the second condenser 900 and the second liquid container 1000 provided. The isopropanol in the paraffin was substantively removed in the oven before filling the paraffin into the retort. Different temperatures and pressures in the oven were investigated and the results are shown in Table 5.

Table 4 IPA removal effect under different conditions in carrier material container

| Indicators | Ex. 16 | Ex. 17 | Ex. 18 | Ex. 19 | CE.6 | CE.7 |
|---|---|---|---|---|---|---|
| | 65°C, -10 kPa | 65°C, -40 kPa | 65°C to 70°C within 30 minutes, -20 kPa | 65°C to 85°C within 30 minutes, -40 kPa | 65°C, ambient pressure | 85°C, ambient pressure |
| IPA removal efficiency | 30% | 68% | 72% | 99% | 10% | 99% |
| IPA foam generation | No foam | No foam | No foam | No foam | No foam | Rapid Large amount |

Example 6

In this example, a total about 1120 ml IPA was drawn out of the paraffin in the retort in the paraffin infiltration step (about 60 minutes).
IPA mass: $0.7683 \times 1120 \approx 860.5g \approx 13mol$
Quantity of heat for 1120 mL IPA out of the paraffin in the retort:

$$\text{Quantity of heat} = 40.06 KJ/mol \times 13 mol = 520.78\ KJ$$

If 80% or above of IPA vapour is to be cooled in the cooling parts and trap bottle, the cooling ability of cooling parts and trap bottle should be $> 520.78 \times 80\% \approx 417\ KJ$. Therefore, 417 KJ heat exchange ability should be provided for the cooling parts and trap bottle to cool the IPA vapour.

Reference throughout this specification to "an embodiment", "some embodiments", "an example", "a specific example", or "some examples" means that a particular feature, structure, material, or characteristic described in connection with the embodiment or example is included in at least one embodiment or example of the present invention. Thus, the appearances of above phrases in various places throughout this specification are not necessarily referring to the same embodiment or example of the present invention. Furthermore, the particular features, structures, materials, or characteristics may be combined in any suitable manner in one or more embodiments or examples. In addition, different embodiments or examples described in the specification, as well as features of embodiments or examples, without conflicting, may be combined by one skilled in the art.

Although explanatory embodiments have been shown and described, it would be appreciated by those skilled in the art that the above embodiments cannot be construed to limit the present invention, and changes, alternatives, and modifications can be made in the embodiments without departing from the principles and scope of the present invention as defined by the appended claims.

**References of drawings:**

reactor 100

first carrier material inlet 101
first carrier material outlet 102
processing reagent inlet 103
processing reagent outlet 104
first gas outlet 105
carrier material container 200
second carrier material outlet 201
second gas outlet 202
second carrier material inlet 203
second heater 300
first condenser 400
first air inlet 401
first liquid outlet 402
cooling coil 403
cooling fan 404
cooling channel 405
first liquid container 500
on-off valve 600
first pressure control device 700
pump 701
pressure sensor 702
hydraulic damper 703
air valves 704
relief valves 705
air manifold 706
rotary valve 707
first heater 800
second condenser 900
second air inlet 901
second liquid outlet 902
second liquid container 1000
second pressure control device 1100
processing reagent container 1200
return inlet 1201
discharge outlet 1202

**Claims**

1. A tissue processor (1), comprising:

a reactor (100),

configured to accommodate a tissue sample and allow the tissue sample to be processed, and
provided with a first carrier material inlet (101), a first carrier material outlet (102), a processing reagent inlet (103), a processing reagent outlet (104) and a first gas outlet (105);

a carrier material container (200),

configured to accommodate a carrier material, and provided with a second carrier material outlet (201) connected to the first carrier material inlet (101) of the reactor (100), and a second gas outlet (202);
a first heater (800) configured to heat a processing reagent and/or the carrier material in the reactor (100);

a first condenser (400),

provided with a first air inlet (401) connected to the first gas outlet (105) of the reactor (100), and a first liquid outlet (402), and
configured to condense at least a portion of gas from the reactor (100) into a liquid; and

a first liquid container (500), connected to the first liquid outlet (402) of the first condenser (400) and configured to receive the condensed liquid from the first condenser (400) **characterized in that**
the tissue processor (1) further comprises a first pressure control device (700), configured to control the reactor (100) to be operated under pressures as follows:

a first stage: keeping at a pressure of -15 kPa to -50 kPa preferably -40 kPa for 20 to 40 minutes preferably 30 minutes,
a second stage: decreasing the pressure at a rate of 0.5 to 4 kPa/min for 5 to 25 minutes preferably 15 minutes,
a third stage: keeping at a pressure of -60 kPa to -75 kPa preferably -70 kPa for 10 to 25 minutes preferably 15 minutes.

2. The tissue processor (1) according to claim 1, further comprising an on-off valve (600) arranged at a pipe connecting the first carrier material inlet (101) of the reactor (100) and the second carrier material outlet (201) of the carrier material container (200).

3. The tissue processor (1) according claim 1 or 2, further comprising a second heater (300), configured to heat the carrier material in the carrier material container (200);a first condenser (400).

4. The tissue processor (1) according to any one of claims 1 to 3, further comprising:

a second condenser (900) provided with a second air inlet (901) connected to the second gas outlet (202) of the carrier material container (200), and a second liquid outlet (902), and configured to condense at least a part of gas from the carrier material container (200) into a liquid; and
a second liquid container (1000), connected to the second liquid outlet (902) of the second condenser (900) and configured to receive the condensed liquid from the second condenser (900).

5. The tissue processor (1) according to claim 1 or 4, wherein the first condenser (400) and the second condenser (900) each comprise a cooling coil (403).

6. The tissue processor (1) according to any one of claims 1 to 5, further comprising a second pressure control device (1100) configured to control the carrier material container (200) to be operated under pressures in cycles each comprising
a pressure from -20 to -75 kPa preferably -40 kPa for 25 seconds to 45 seconds preferably 34 seconds.

7. The tissue processor (1) according to any one of claims 1 to 6, further comprising a processing reagent container (1200) provided with a discharge outlet (1201) and a return inlet (1202), wherein the discharge outlet (1201) is connected to the processing reagent inlet (103) of the reactor (100), and the return inlet (1202) is connected to the processing reagent outlet (104) of the reactor (100).

8. The tissue processor (1) according to any one of claims 1 to 7, wherein the first carrier material inlet (101) and the first carrier material outlet (102) of the reactor (100) are separately arranged or combined into one same arrangement.

9. A method for tissue processing, performed by the tissue processor (1) according to any one of claims 1 to 8, wherein the method comprises:

providing a tissue sample to be processed in a reactor,
fixing the tissue sample with a fixing reagent,
dehydrating the fixed tissue sample with a dehydrating reagent,
clearing the dehydrated tissue sample and the reactor with a clearing reagent to remove the dehydrating reagent,
providing a carrier material to the reactor from a carrier material container so as to infiltrate the cleared tissue sample, wherein the carrier material comprises the clearing reagent,
controlling the reactor to be at such a temperature that a first clearing reagent vapor is generated from the carrier material,
controlling the reactor to be under such a pressure that the first clearing reagent vapor generated is drawn out of the reactor, and
condensing the first clearing reagent vapor drawn into a liquid by a first condenser to remove the first clearing reagent vapor

**characterized in that**

controlling the reactor to be under such a pressure that the first clearing reagent vapor generated is drawn out of the reactor further comprises controlling the reactor to be operated under pressures as follows:

a first stage: keeping at a pressure of -15 kPa to -50 kPa preferably -40 kPa for 20 to 40 minutes preferably 30 minutes,
a second stage: decreasing the pressure at a rate of 0.5-4 kPa/min for 5 to 25 minutes preferably 15 minutes,
a third stage: keeping at a pressure of -60 kPa to -75 kPa preferably -70 kPa for 10 to 25 minutes preferably 15 minutes.

10. The method according to claim 9, wherein providing a carrier material to the reactor from a carrier material container so as to infiltrate the cleared tissue sample further comprises:

controlling, by an on-off valve, the carrier material to be provided from the carrier material container to the reactor in cycles each comprising an open time of 1 to 10 seconds preferably 1.5 seconds and a close time of 0.2 to 5 seconds preferably 1.0 second.

11. The method according to claim 9 or 10, wherein controlling the reactor to be at such a temperature that a first clearing reagent vapor is generated from the carrier material further comprises controlling the reactor to be operated at temperatures as follows:

increasing at a rate of 0.5 to 2°C/min preferably 1.5°C/min from 50 to 70°C preferably 65°C, to 75 to 90°C preferably 85°C, then keeping at 75 to 90°C preferably 85°C for 30 to 40 minutes.

12. The method according to any one of claims 9 to 11, further comprising removing the clearing reagent from the carrier material container by a second condenser prior to providing a carrier material to the reactor from a carrier material container,

optionally, removing the clearing reagent from the carrier material container by a second condenser further comprises:

controlling the carrier material container to be operated at such a temperature that a second clearing reagent vapor is generated from the carrier material,
controlling the carrier material container to be operated under such a pressure in cycles that the second clearing reagent vapor generated is drawn out of the carrier material container, each cycle comprising:
a pressure from -20 to -75 kPa preferably -40 kPa for 25 seconds to 45 seconds preferably 34 seconds, and condensing the second clearing reagent vapor drawn into a liquid by the second condenser to remove the second clearing reagent vapor.

13. The method according to any one of claims 9 to 12, further comprising providing a carrier material protective reagent to the reactor to remove the clearing reagent in the cleared tissue sample and the reactor, prior to providing a carrier material to the reactor from a carrier material container,
preferably, the carrier material protective reagent comprises a clearing reagent substitute, a mixture of a clearing reagent substitute and a clearing reagent, and a mixture of a clearing reagent substitute and a carrier material.

**Patentansprüche**

1. Gewebeaufbereitungsvorrichtung (1), umfassend:

einen Reaktor (100),

der zum Unterbringen einer Gewebeprobe und zum Ermöglichen eines Verarbeitens der Gewebeprobe ausgebildet ist, und
mit einem ersten Trägermaterialeinlass (101), einem ersten Trägermaterialauslass (102), einem Verarbeitungsreagenzeinlass (103), einem Verarbeitungsreagenzauslass (104) und einem ersten Gasauslass (105) bereitgestellt ist;

einen Trägermaterialbehälter (200),
der zum Unterbringen eines Trägermaterials ausgebildet ist und mit einem zweiten Trägermaterialauslass (201), der mit dem ersten Trägermaterialeinlass (101) des Reaktors (100) verbunden ist, und einem zweiten Gasauslass (202) bereitgestellt ist;

ein erstes Heizelement (800), das zum Erwärmen eines Verarbeitungsreagenzes und/oder des Trägermaterials in dem Reaktor (100) ausgebildet ist;

einen ersten Kondensator (400),

der mit einem ersten Lufteinlass (401), der mit dem ersten Gasauslass (105) des Reaktors (100) verbunden ist, und einem ersten Flüssigkeitsauslass (402) bereitgestellt ist, und

der zum Kondensieren von zumindest einem Teil von Gas aus dem Reaktor (100) zu einer Flüssigkeit ausgebildet ist; und

einen ersten Flüssigkeitsbehälter (500), der mit dem ersten Flüssigkeitsauslass (402) des ersten Kondensators (400) verbunden ist und zum Aufnehmen der kondensierten Flüssigkeit aus dem ersten Kondensator (400) ausgebildet ist,

**dadurch gekennzeichnet, dass**

die Gewebeaufbereitungsvorrichtung (1) weiter eine erste Drucksteuereinrichtung (700) umfasst, die dazu ausgebildet ist, den Reaktor (100) so zu steuern, dass er unter Druck wie folgt betrieben wird:

eine erste Stufe: Halten auf einem Druck von -15 kPa bis -50 kPa, bevorzugt -40 kPa, für 20 bis 40 Minuten, bevorzugt 30 Minuten,

eine zweite Stufe: Verringern des Drucks mit einer Rate von 0,5 bis 4 kPa/min für 5 bis 25 Minuten, bevorzugt 15 Minuten,

eine dritte Stufe: Halten auf einem Druck von -60 kPa bis -75 kPa, bevorzugt -70 kPa, für 10 bis 25 Minuten, bevorzugt 15 Minuten.

2. Gewebeaufbereitungsvorrichtung (1) nach Anspruch 1, weiter umfassend ein Ein-Aus-Ventil (600), das an einem Rohr angeordnet ist, welches den ersten Trägermaterialeinlass (101) des Reaktors (100) und den zweiten Trägermaterialauslass (201) des Trägermaterialbehälters (200) verbindet.

3. Gewebeaufbereitungsvorrichtung (1) nach Anspruch 1 oder 2, weiter umfassend ein zweites Heizelement (300), das zum Erwärmen des Trägermaterials in dem Trägermaterialbehälter (200) ausgebildet ist; einen ersten Kondensator (400).

4. Gewebeaufbereitungsvorrichtung (1) nach einem der Ansprüche 1 bis 3, weiter umfassend:

einen zweiten Kondensator (900), der mit einem zweiten Lufteinlass (901), der mit dem zweiten Gasauslass (202) des Trägermaterialbehälters (200) verbunden ist, und einem zweiten Flüssigkeitsauslass (902) versehen ist und zum Kondensieren von zumindest einem Teil von Gas aus dem Trägermaterialbehälter (200) zu einer Flüssigkeit ausgebildet ist; und

einen zweiten Flüssigkeitsbehälter (1000), der mit dem zweiten Flüssigkeitsauslass (902) des zweiten Kondensators (900) verbunden ist und zum Aufnehmen der kondensierten Flüssigkeit aus dem zweiten Kondensator (900) ausgebildet ist.

5. Gewebeaufbereitungsvorrichtung (1) nach Anspruch 1 oder 4, wobei der erste Kondensator (400) und der zweite Kondensator (900) jeweils eine Kühlspule (403) umfassen.

6. Gewebeaufbereitungsvorrichtung (1) nach einem der Ansprüche 1 bis 5, weiter umfassend eine zweite Drucksteuereinrichtung (1100), die dazu ausgebildet ist, den Trägermaterialbehälter (200) so zu steuern, dass er unter Druck in Zyklen betrieben wird, die jeweils

einen Druck von -20 bis -75 kPa, bevorzugt -40 kPa, für 25 Sekunden bis 45 Sekunden, bevorzugt 34 Sekunden, umfassen.

7. Gewebeaufbereitungsvorrichtung (1) nach einem der Ansprüche 1 bis 6, weiter umfassend einen Verarbeitungsreagenzbehälter (1200), der mit einem Ablaufauslass (1201) und einem Rücklaufeinlass (1202) bereitgestellt ist, wobei der Ablaufauslass (1201) mit dem Verarbeitungsreagenzeinlass (103) des Reaktors (100) verbunden ist und der Rücklaufeinlass (1202) mit dem Verarbeitungsreagenzauslass (104) des Reaktors (100) verbunden ist.

8. Gewebeaufbereitungsvorrichtung (1) nach einem der Ansprüche 1 bis 7, wobei der erste Trägermaterialeinlass (101) und der erste Trägermaterialauslass (102) des Reaktors (100) separat angeordnet oder in einer selben Anordnung kombiniert sind.

9. Verfahren zur Gewebeaufbereitung, durchgeführt von der Gewebeaufbereitungsvorrichtung (1) nach einem der Ansprüche 1 bis 8, wobei das Verfahren umfasst:

> Bereitstellen einer Gewebeprobe, die in einem Reaktor verarbeitet werden soll,
> Fixieren der Gewebeprobe mit einem Fixierungsreagenz,
> Dehydrieren der fixierten Gewebeprobe mit einem Dehydrierungsreagenz,
> Klären der dehydrierten Gewebeprobe und des Reaktors mit einem Klärungsreagenz zum Entfernen des Dehydrierungsreagenzes,
> Bereitstellen eines Trägermaterials an den Reaktor aus einem Trägermaterialbehälter zum Infiltrieren der geklärten Gewebeprobe, wobei das Trägermaterial das Klärungsreagenz umfasst,
> Steuern des Reaktors so, dass er eine solche Temperatur aufweist, dass ein erster Klärungsreagenzdampf aus dem Trägermaterial erzeugt wird,
> Steuern des Reaktors so, dass er unter einem solchen Druck steht, dass der erzeugte erste Klärungsreagenzdampf aus dem Reaktor gezogen wird, und
> Kondensieren des ersten Klärungsreagenzdampfes, der in eine Flüssigkeit gezogen wird, durch einen ersten Kondensator, um den ersten Klärungsreagenzdampf zu entfernen
> **dadurch gekennzeichnet, dass**
> das Steuern des Reaktors, sodass er unter einem solchen Druck steht, dass der erzeugte erste Klärungsreagenzdampf aus dem Reaktor gezogen wird, weiter ein solches Steuern des Reaktors umfasst, dass er unter Druck wie folgt betrieben wird:
>
>> eine erste Stufe: Halten auf einem Druck von -15 kPa bis -50 kPa, bevorzugt -40 kPa, für 20 bis 40 Minuten, bevorzugt 30 Minuten,
>> eine zweite Stufe: Verringern des Drucks mit einer Rate von 0,5-4 kPa/min für 5 bis 25 Minuten, bevorzugt 15 Minuten,
>> eine dritte Stufe: Halten auf einem Druck von -60 kPa bis -75 kPa, bevorzugt -70 kPa, für 10 bis 25 Minuten, bevorzugt 15 Minuten.

10. Verfahren nach Anspruch 9, wobei das Bereitstellen eines Trägermaterials an den Reaktor aus einem Trägermaterialbehälter zum Infiltrieren der geklärten Gewebeprobe weiter umfasst:
Steuern, durch ein Ein-Aus-Ventil, des Trägermaterials, das aus dem Trägermaterialbehälter an den Reaktor bereitgestellt werden soll, in Zyklen, die jeweils eine Öffnungszeit von 1 bis 10 Sekunden, bevorzugt 1,5 Sekunden, und eine Schließzeit von 0,2 bis 5 Sekunden, bevorzugt 1,0 Sekunden, umfassen.

11. Verfahren nach Anspruch 9 oder 10, wobei das Steuern des Reaktors so, dass er eine solche Temperatur aufweist, dass ein erster Klärungsreagenzdampf aus dem Trägermaterial erzeugt wird, weiter ein solches Steuern des Reaktors umfasst, dass er bei Temperaturen wie folgt betrieben wird:
Erhöhen mit einer Rate von 0,5 bis 2 °C/min, bevorzugt 1,5 °C/min, von 50 bis 70 °C, bevorzugt 65 °C, auf 75 bis 90 °C, bevorzugt 85 °C, dann Halten auf 75 bis 90 °C, bevorzugt 85 °C, für 30 bis 40 Minuten.

12. Verfahren nach einem der Ansprüche 9 bis 11, weiter umfassend das Entfernen des Klärungsreagenzes aus dem Trägermaterialbehälter durch einen zweiten Kondensator vor dem Bereitstellen eines Trägermaterials an den Reaktor aus einem Trägermaterialbehälter,
wobei optional das Entfernen des Klärungsreagenzes aus dem Trägermaterialbehälter durch einen zweiten Kondensator weiter umfasst:

> Steuern des Trägermaterialbehälters so, dass er bei einer solchen Temperatur betrieben wird, dass ein zweiter Klärungsreagenzdampf aus dem Trägermaterial erzeugt wird,
> Steuern des Trägermaterialbehälters so, dass er unter einem solchen Druck in Zyklen betrieben wird, dass der erzeugte zweite Klärungsreagenzdampf aus dem Trägermaterialbehälter gezogen wird, wobei jeder Zyklus umfasst:
> einen Druck von -20 bis -75 kPa, bevorzugt -40 kPa, für 25 Sekunden bis 45 Sekunden, bevorzugt 34 Sekunden, und
> Kondensieren des zweiten Klärungsreagenzdampfes, der in eine Flüssigkeit gezogen wird, durch den zweiten Kondensator, um den zweiten Klärungsreagenzdampf zu entfernen.

13. Verfahren nach einem der Ansprüche 9 bis 12, weiter umfassend das Bereitstellen eines Trägermaterial-Schutzreagenzes an den Reaktor zum Entfernen des Klärungsreagenzes in der geklärten Gewebeprobe und dem Reaktor, vor dem Bereitstellen eines Trägermaterials an den Reaktor aus einem Trägermaterialbehälter, wobei bevorzugt das Trägermaterial-Schutzreagenz ein Klärungsreagenz-Substitut, ein Gemisch aus einem Klärungsreagenz-Substitut und einem Klärungsreagenz und ein Gemisch aus einem Klärungsreagenz-Substitut und einem Trägermaterial umfasst.

## Revendications

1. Processeur (1) de tissu, comprenant :

   un réacteur (100),

   configuré pour accueillir un échantillon de tissu et permettre le traitement de l'échantillon de tissu, et doté d'une première entrée (101) de matériau porteur, d'une première sortie (102) de matériau porteur, d'une entrée (103) de réactif de traitement, d'une sortie (104) de réactif de traitement et d'une première sortie (105) de gaz ;

   un contenant (200) de matériau porteur, configuré pour accueillir un matériau porteur, et doté d'une deuxième sortie (201) de matériau porteur reliée à la première entrée (101) de matériau porteur du réacteur (100), et d'une deuxième sortie (202) de gaz ; un premier dispositif de chauffage (800) configuré pour chauffer un réactif de traitement et/ou le matériau porteur dans le réacteur (100) ; un premier condenseur (400),

   doté d'une première entrée d'air (401) reliée à la première sortie (105) de gaz du réacteur (100), et d'une première sortie (402) de liquide, et configuré pour condenser au moins une portion de gaz issu du réacteur (100) en un liquide ; et

   un premier contenant (500) de liquide, relié à la première sortie (402) de liquide du premier condenseur (400) et configuré pour recevoir le liquide condensé issu du premier condenseur (400) **caractérisé en ce que** le processeur (1) de tissu comprend en outre un premier dispositif (700) de commande de pression, configuré pour commander le réacteur (100) pour qu'il fonctionne sous des pressions comme suit :

   un premier étage : maintien à une pression de -15 kPa à -50 kPa, de préférence -40 kPa pendant 20 à 40 minutes, de préférence 30 minutes, un deuxième étage : diminution de la pression à une cadence de 0,5 à 4 kPa/min pendant 5 à 25 minutes, de préférence 15 minutes, un troisième étage : maintien à une pression de -60 kPa à -75 kPa, de préférence -70 kPa pendant 10 à 25 minutes, de préférence 15 minutes.

2. Processeur (1) de tissu selon la revendication 1, comprenant en outre une vanne (600) tout ou rien agencée au niveau d'un tuyau reliant la première entrée (101) de matériau porteur du réacteur (100) et la deuxième sortie (201) de matériau porteur du contenant (200) de matériau porteur.

3. Processeur (1) de tissu selon la revendication 1 ou la revendication 2, comprenant en outre un deuxième dispositif de chauffage (300), configuré pour chauffer le matériau porteur dans le contenant (200) de matériau porteur ; un premier condenseur (400).

4. Processeur (1) de tissu selon l'une quelconque des revendications 1 à 3, comprenant en outre :

   un deuxième condenseur (900) doté d'une deuxième entrée (901) d'air reliée à la deuxième sortie (202) de gaz du contenant (200) de matériau porteur, et d'une deuxième sortie (902) de liquide, et configuré pour condenser au moins une partie du gaz issu du contenant (200) de matériau porteur en un liquide ; et

un deuxième contenant (1000) de liquide, relié à la deuxième sortie (902) de liquide du deuxième condenseur (900) et configuré pour recevoir le liquide condensé issu du deuxième condenseur (900).

5. Processeur (1) de tissu selon la revendication 1 ou la revendication 4, dans lequel le premier condenseur (400) et le deuxième condenseur (900) comprennent chacun un serpentin (403) de refroidissement.

6. Processeur (1) de tissu selon l'une quelconque des revendications 1 à 5, comprenant en outre un deuxième dispositif (1100) de commande de pression configuré pour commander le contenant (200) de matériau porteur pour qu'il fonctionne sous des pressions en cycles comprenant chacun

une pression de -20 à -75 kPa, de préférence -40 kPa pendant 25 secondes à 45 secondes, de préférence 34 secondes.

7. Processeur (1) de tissu selon l'une quelconque des revendications 1 à 6, comprenant en outre un contenant (1200) de réactif de traitement doté d'une sortie (1201) d'évacuation et d'une entrée (1202) de retour, dans lequel la sortie (1201) d'évacuation est reliée à l'entrée (103) de réactif de traitement du réacteur (100), et l'entrée (1202) de retour est reliée à la sortie (104) de réactif de traitement du réacteur (100).

8. Processeur (1) de tissu selon l'une quelconque des revendications 1 à 7, dans lequel la première entrée (101) de matériau porteur et la première sortie (102) de matériau porteur du réacteur (100) sont agencées séparément ou combinées en un même agencement.

9. Procédé de traitement de tissu, réalisé par le processeur (1) de tissu selon l'une quelconque des revendications 1 à 8, dans lequel le procédé comprend :

la fourniture d'un échantillon de tissu à traiter dans un réacteur,
la fixation de l'échantillon de tissu avec un réactif de fixation,
la déshydratation de l'échantillon de tissu fixé avec un réactif de déshydratation,
la clarification de l'échantillon de tissu déshydraté et du réacteur avec un réactif de clarification pour éliminer le réactif de déshydratation,
la fourniture d'un matériau porteur au réacteur à partir d'un contenant de matériau porteur de façon à infiltrer l'échantillon de tissu clarifié, dans lequel le matériau porteur comprend le réactif de clarification,
la commande du réacteur pour qu'il soit à une température telle qu'une première vapeur de réactif de clarification est générée à partir du matériau porteur,
la commande du réacteur pour qu'il soit sous une pression telle que la première vapeur de réactif de clarification générée est aspirée hors du réacteur, et
la condensation de la première vapeur de réactif de clarification aspirée en un liquide par un premier condenseur pour éliminer la première vapeur de réactif de clarification
**caractérisé en ce que**
la commande du réacteur pour qu'il soit sous une pression telle que la première vapeur de réactif de clarification générée est aspirée hors du réacteur comprend en outre la commande du réacteur pour qu'il fonctionne sous des pressions comme suit :

un premier étage : maintien à une pression de -15 kPa à -50 kPa, de préférence -40 kPa pendant 20 à 40 minutes, de préférence 30 minutes,
un deuxième étage : diminution de la pression à une cadence de 0,5 à 4 kPa/min pendant 5 à 25 minutes, de préférence 15 minutes,
un troisième étage : maintien à une pression de -60 kPa à -75 kPa, de préférence -70 kPa pendant 10 à 25 minutes, de préférence 15 minutes.

10. Procédé selon la revendication 9, dans lequel la fourniture d'un matériau porteur au réacteur à partir d'un contenant de matériau porteur de façon à infiltrer l'échantillon de tissu clarifié comprend en outre :
la commande, par une vanne tout ou rien, du matériau porteur à fournir du contenant de matériau porteur au réacteur en cycles comprenant chacun un temps d'ouverture de 1 à 10 secondes, de préférence 1,5 seconde et un temps de fermeture de 0,2 à 5 secondes, de préférence 1,0 seconde.

11. Procédé selon la revendication 9 ou la revendication 10, dans lequel la commande du réacteur à une température telle qu'une première vapeur de réactif de clarification est générée à partir du matériau porteur comprend en outre la commande du réacteur pour qu'il fonctionne à des températures comme suit :

augmentation à une cadence de 0,5 à 2 °C/min, de préférence 1,5 °C/min de 50 à 70 °C, de préférence 65 °C, à 75 à 90 °C, de préférence 85 °C, puis maintien à 75 à 90 °C, de préférence 85 °C pendant 30 à 40 minutes.

**12.** Procédé selon l'une quelconque des revendications 9 à 11, comprenant en outre l'élimination du réactif de clarification du contenant de matériau porteur par un deuxième condenseur avant la fourniture d'un matériau porteur au réacteur à partir d'un contenant de matériau porteur,
facultativement, l'élimination du réactif de clarification du contenant de matériau porteur par un deuxième condenseur comprend en outre :

la commande du contenant de matériau porteur pour qu'il fonctionne à une température telle qu'une deuxième vapeur de réactif de clarification est générée à partir du matériau porteur,
la commande du contenant de matériau porteur pour qu'il fonctionne sous une pression en cycles telle que la deuxième vapeur de réactif de clarification générée est aspirée hors du contenant de matériau porteur, chaque cycle comprenant :
une pression de -20 à -75 kPa, de préférence -40 kPa pendant 25 secondes à 45 secondes, de préférence 34 secondes, et
la condensation de la deuxième vapeur de réactif de clarification aspirée dans un liquide par le deuxième condenseur pour éliminer la deuxième vapeur de réactif de clarification.

**13.** Procédé selon l'une quelconque des revendications 9 à 12, comprenant en outre la fourniture d'un réactif protecteur de matériau porteur au réacteur pour éliminer le réactif de clarification dans l'échantillon de tissu clarifié et le réacteur, avant la fourniture d'un matériau porteur au réacteur à partir d'un contenant de matériau porteur,
de préférence, le réactif protecteur de matériau porteur comprend un substitut de réactif de clarification, un mélange d'un substitut de réactif de clarification et d'un réactif de clarification, et un mélange d'un substitut de réactif de clarification et d'un matériau porteur.

**1**

300

a second
heater

401  105          100
                  101    201                  200
400
a first condenser        a reactor         a carrier material
            102                            container

402          104          103

500
a first liquid
container                                          203

Figure 1

**1**

600          300

an on-off          a second
valve          heater

401  105          100
                  101    201                  200
400
a first condenser        a reactor         a carrier material
            102                            container

402          104          103

500
a first liquid
container                                          203

Figure 2

Figure 3

Figure 4

Figure 5

Figure 6

Figure 7

Figure 8A

Figure 8B

Figure 9

S100

providing a tissue sample to be processed in a reactor

S200

fixing the tissue sample with a fixing reagent

S300

dehydrating the fixed tissue sample with a dehydrating reagent

S400

clearing the dehydrated tissue sample and the reactor with a clearing reagent to remove the dehydrating reagent

S500

providing a carrier material to the reactor from a carrier material container so as to infiltrate the cleared tissue sample, wherein the carrier material comprises the clearing reagent

S600

controlling the reactor to be at such a temperature that a first clearing reagent vapor is generated from the carrier material

S700

controlling the reactor to be under such a pressure that the first clearing reagent vapor generated is drawn out of the reactor

S800

condensing the first clearing reagent vapor drawn into a liquid by a first condenser to remove the first clearing reagent vapor

Figure 10

removing the clearing reagent from the carrier material container by a second condenser

S900

providing a carrier material to the reactor from a carrier material container so as to infiltrate the cleared tissue sample, wherein the carrier material comprises the clearing reagent

S500

Figure 11

controlling the carrier material container to be operated at such a temperature that a second clearing reagent vapor is generated from the carrier material

S901

controlling the carrier material container to be operated under such a pressure in cycles that the second clearing reagent vapor generated is drawn out of the carrier material container

S902

condensing the second clearing reagent vapor drawn into a liquid by the second condenser to remove the second clearing reagent vapor

S903

Figure 12

S100

providing a tissue sample to be processed in a reactor

S200

fixing the tissue sample with a fixing reagent

S300

dehydrating the fixed tissue sample with a dehydrating reagent

S400

clearing the dehydrated tissue sample and the reactor with a clearing reagent to remove the dehydrating reagent

S500

providing a carrier material to the reactor from a carrier material container so as to infiltrate the cleared tissue sample, wherein the carrier material comprises the clearing reagent

S900

removing the clearing reagent from the carrier material container by a second condenser

S500

providing a carrier material to the reactor from a carrier material container so as to infiltrate the cleared tissue sample, wherein the carrier material comprises the clearing reagent

Figure 13

Figure 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101929927 B
- EP 4182656 A1

- WO 2016187937 A1